# DEMANDE DE BREVET EUROPEEN

(11) **EP 4 585 785 A1**
(43) Date de publication de la demande: **16.07.2025**
(21) Numéro de dépôt: 25151110.1
(22) Date de dépôt: 10.01.2025
(51) Int. Cl.: E06B 9/171, E06B 9/72, H02K 7/116

(54) **ACTIONNEUR ÉLECTROMÉCANIQUE ET DISPOSITIF D'OCCULTATION COMPRENANT UN TEL ACTIONNEUR ÉLECTROMÉCANIQUE**

(30) Priorité: 12.01.2024 FR 2400315
(71) Demandeur: SOMFY ACTIVITES SA, 74300 Cluses (FR)
(72) Inventeur: FOISSARD, Margaux, 74300 CLUSES (FR); BRONDEX, Adrien, 74300 CLUSES (FR)
(74) Mandataire: Lavoix

(57) **Abrégé**

Un actionneur électromécanique comprend un moteur électrique, un réducteur, un carter, un arbre de sortie et un couvercle d'extrémité. Le carter comprend au moins une échancrure, la ou chaque échancrure étant ménagée au niveau d'une extrémité du carter et comprenant au moins un premier bord latéral et un deuxième bord latéral, opposé au premier bord latéral. Le couvercle d'extrémité (49) comprend au moins un corps (49a) et un cran (55). Le ou chaque cran (55) est emmanché dans la ou l'une des échancrures. Le ou chaque cran (55) comprend au moins un premier bord latéral (55a) et un deuxième bord latéral (55b). Le couvercle d'extrémité (49) comprend également une zone de jonction (58) située entre une surface externe (49a1) du corps (49a) et chacun des premier et deuxième bords latéraux (55a, 55b) du ou de chaque cran (55). Le ou chaque cran (55) comprend un plan médian (P) passant par un axe de rotation (X) de l'actionneur électromécanique. Chacun des premier et deuxième bords latéraux (55a, 55b) du ou de chaque cran (55) est incliné, par rapport au plan médian (P), d'un angle (α) dont la valeur est comprise entre 5° et 45°, de sorte à coincer chacun des premier et deuxième bords latéraux (56a, 56b) de la ou de l'une des échancrures (56) au niveau de chaque zone de jonction (58).

## Description

La présente invention concerne un actionneur électromécanique d'un dispositif d'occultation, autrement dit un actionneur électromécanique pour un dispositif d'occultation.

La présente invention concerne également un dispositif d'occultation comprenant un écran entraîné en déplacement par un tel actionneur électromécanique.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire tel qu'un volet, une porte, une grille, un store ou tout autre matériel équivalent, appelé par la suite écran.

On connaît déjà le document WO 2019/072841 A1 qui décrit un actionneur électromécanique d'un dispositif d'occultation. L'actionneur électromécanique comprend un moteur électrique, un réducteur, un carter, un arbre de sortie et un couvercle d'extrémité. Le moteur électrique et le réducteur sont montés à l'intérieur du carter. Le carter comprend une première extrémité et une deuxième extrémité, la deuxième extrémité étant opposée à la première extrémité. Le couvercle d'extrémité est disposé au niveau de la deuxième extrémité du carter. Le carter comprend une surface intérieure et une surface extérieure, la surface intérieure étant opposée à la surface extérieure. Le carter comprend deux échancrures. Chaque échancrure est ménagée au niveau de la deuxième extrémité du carter. Le couvercle d'extrémité comprend deux crans. Chaque cran est emmanché dans l'une des échancrures. Chaque cran comprend un premier bord latéral et un deuxième bord latéral, le deuxième bord latéral étant opposé au premier bord latéral. L'actionneur électromécanique comprend un axe de rotation passant par un centre des organes montés au moins en partie à l'intérieur du carter. Chaque cran comprend un plan médian passant par l'axe de rotation. En outre, chacun des premier et deuxième bords latéraux de chaque cran est parallèle au plan médian. Cet actionneur électromécanique donne globalement satisfaction.

Cependant, cet actionneur électromécanique présente l'inconvénient que le réducteur est fixé au carter par un ou plusieurs éléments de fixation de type goupille, de type vis ou de type cran de maintien, pour permettre une transmission de couple du réducteur à l'arbre de sortie, lors de l'activation électrique du moteur électrique.

Ainsi, comme chacun des premier et deuxième bords latéraux de chaque cran est parallèle au plan médian, une absence de ce ou ces éléments de fixation de type goupille, de type vis ou de type cran de maintien, entre le réducteur et le carter, induit que le réducteur est entraîné en rotation à l'intérieur du carter, autour d'un axe de rotation de l'actionneur électromécanique, lors de l'activation électrique du moteur électrique.

En outre, lorsque le carter présente une épaisseur faible, celui-ci se déforme, lors de l'activation électrique du moteur électrique.

Par conséquent, chaque cran du couvercle d'extrémité sort de l'échancrure du carter, dans laquelle ce cran est préalablement emmanché, en passant sous la surface intérieure du carter.

Pour permettre la fixation du ou des éléments de fixation de type goupille, de type vis ou de type cran de maintien, entre le réducteur et le carter, le carter comprend soit un ou plusieurs trous, soit une ou plusieurs déformations.

Ainsi, le coût d'obtention de l'actionneur électromécanique est élevé, en raison d'opérations de fabrication supplémentaires et de la complexité de mise en oeuvre de celles-ci, ainsi qu'en raison des opérations de contrôle nécessaires pour valider la conformité du carter et la fixation du réducteur dans le carter.

En outre, le taux de défauts de production de l'actionneur électromécanique est amplifié, notamment en raison de défauts esthétiques du carter, puisque celui-ci est recouvert d'une couche de peinture qui peut être écaillée, de défauts de positionnement soit du ou des trous dans le carter, soit de la ou des déformations du carter, ou de présence de copeaux provenant du carter lors du perçage de celui-ci.

Par ailleurs, le carter et le réducteur ne sont utilisés que pour un seul assemblage de l'actionneur électromécanique.

Par conséquent, le carter et le réducteur ne peuvent pas être réutilisés pour un deuxième assemblage de l'actionneur électromécanique, notamment suite à une réparation de celui-ci.

La présente invention a pour but de résoudre les inconvénients précités et de proposer un actionneur électromécanique d'un dispositif d'occultation, ainsi qu'un dispositif d'occultation comprenant un tel actionneur électromécanique, permettant d'améliorer une tenue mécanique d'un couvercle d'extrémité sur un carter et de s'affranchir d'un ou plusieurs éléments de fixation d'un réducteur par rapport au carter, tout en garantissant une transmission de couple satisfaisante du réducteur à un arbre de sortie, lors de l'activation électrique d'un moteur électrique

A cet égard, la présente invention vise, selon un premier aspect, un actionneur électromécanique d'un dispositif d'occultation,
l'actionneur électromécanique comprenant au moins :
   - un moteur électrique,
   - un réducteur,
   - un carter, le moteur électrique et le réducteur étant montés à l'intérieur du carter,
   - un arbre de sortie, le réducteur étant assemblé avec l'arbre de sortie, et
   - un couvercle d'extrémité,
le carter comprenant :
   - une première extrémité et une deuxième extrémité, la deuxième extrémité étant opposée à la première extrémité, le couvercle d'extrémité étant disposé au niveau de la deuxième extrémité du carter,
   - une surface intérieure et une surface extérieure, la surface intérieure étant opposée à la surface extérieure, et
   - au moins une échancrure, la ou chaque échancrure étant ménagée au niveau de la deuxième extrémité du carter, la ou chaque échancrure comprenant au moins un premier bord latéral et un deuxième bord latéral, le deuxième bord latéral étant opposé au premier bord latéral,
le couvercle d'extrémité comprenant au moins :
   - un corps, le corps comprenant une surface externe,
   - un cran, le ou chaque cran étant emmanché dans la ou l'une des échancrures, le ou chaque cran comprenant au moins un premier bord latéral et un deuxième bord latéral, le deuxième bord latéral étant opposé au premier bord latéral, et
   - une zone de jonction située entre la surface externe du corps et chacun des premier et deuxième bords latéraux du ou de chaque cran,
l'actionneur électromécanique comprenant un axe de rotation passant par un centre des organes montés au moins en partie à l'intérieur du carter, le ou chaque cran comprenant un plan médian passant par l'axe de rotation.

Selon l'invention, chacun des premier et deuxième bords latéraux du ou de chaque cran est incliné, par rapport au plan médian, d'un angle dont la valeur est comprise entre 5° et 45°, de sorte à coincer chacun des premier et deuxième bords latéraux de la ou de l'une des échancrures au niveau de chaque zone de jonction.

Ainsi, l'inclinaison de chacun des premier et deuxième bords latéraux du ou de chaque cran du couvercle d'extrémité, par rapport au plan médian, permet d'améliorer une tenue mécanique du couvercle d'extrémité sur le carter et de s'affranchir d'un ou plusieurs éléments de fixation du réducteur par rapport au carter, notamment de type goupille, de type vis ou de type cran de maintien, de sorte à garantir une transmission de couple du réducteur à l'arbre de sortie, lors de l'activation électrique du moteur électrique.

De cette manière, l'inclinaison de chacun des premier et deuxième bords latéraux du ou de chaque cran du couvercle d'extrémité, par rapport au plan médian, permet d'éviter que le réducteur soit entraîné en rotation à l'intérieur du carter, autour de l'axe de rotation, lors de l'activation électrique du moteur électrique.

Par conséquent, même dans le cas où une épaisseur du carter est faible, le ou chaque cran du couvercle d'extrémité reste à l'intérieur de la ou de l'une des échancrures du carter, dans laquelle ce cran est emmanché, sans passer sous la surface intérieure du carter, lors de l'activation électrique du moteur électrique.

En outre, l'absence d'un ou plusieurs éléments de fixation, notamment de type goupille, de type vis ou de type cran de maintien, entre le réducteur et le carter permet de s'affranchir soit d'un ou plusieurs trous dans le carter, soit d'une ou plusieurs déformations du carter.

De cette manière, le coût d'obtention de l'actionneur électromécanique est moins élevé et le taux de défauts de production de l'actionneur électromécanique est minimisé, étant donné que la fabrication du carter ne nécessite pas d'opérations de perçage ou de déformation de celui-ci, pour fixer le réducteur au carter.

Par ailleurs, le carter et le réducteur peuvent être réutilisés pour un autre assemblage de l'actionneur électromécanique, notamment suite à une réparation de celui-ci.

Selon une caractéristique avantageuse de l'invention, la surface externe du corps est montée contre la surface intérieure du carter avec un ajustement serré.

Selon une autre caractéristique avantageuse de l'invention, le ou chaque cran s'étend à partir de la surface externe du corps, selon une direction radiale à l'axe de rotation et vers l'extérieur du couvercle d'extrémité. En outre, le corps comprend un méplat ménagé au niveau de chaque zone de jonction.

Selon une autre caractéristique avantageuse de l'invention, le carter est un tube présentant une section circulaire. Le carter est recouvert d'une couche de peinture déposée au moins sur la surface extérieure du carter. Le ou chaque cran du couvercle d'extrémité comprend une surface extérieure. En outre, une valeur d'un rayon entre l'axe de rotation et la surface extérieure du ou de chaque cran est supérieure ou égale à une valeur d'un rayon entre l'axe de rotation et la surface extérieure du carter, la surface extérieure du carter étant la surface extérieure du carter non-peinte.

Selon une autre caractéristique avantageuse de l'invention, le carter présente une épaisseur définie entre ses surfaces intérieure et extérieure. En outre, l'épaisseur du carter est inférieure ou égale à un millimètre et demi.

Selon une autre caractéristique avantageuse de l'invention, le couvercle d'extrémité et le carter sont fixés entre eux, au moyen de premiers éléments de fixation. En outre, les premiers éléments de fixation du couvercle d'extrémité avec le carter sont des éléments de fixation par encliquetage élastique.

Selon une autre caractéristique avantageuse de l'invention, les premiers éléments de fixation constituent une butée de positionnement du couvercle d'extrémité par rapport au carter, au niveau de la deuxième extrémité du carter.

Selon une autre caractéristique avantageuse de l'invention, le couvercle d'extrémité est fixé au réducteur au moyen de deuxièmes éléments de fixation.

Selon une autre caractéristique avantageuse de l'invention, le réducteur comprend des premières encoches et des premières languettes disposées alternativement autour de l'axe de rotation. Le couvercle d'extrémité comprend des deuxièmes languettes et des deuxièmes encoches disposées alternativement autour de l'axe de rotation. En outre, les premières encoches et les premières languettes du réducteur sont imbriquées dans les deuxièmes languettes et les deuxièmes encoches du couvercle d'extrémité.

La présente invention vise, selon un deuxième aspect, un dispositif d'occultation, le dispositif d'occultation comprenant au moins :
- un écran, et
- un actionneur électromécanique conforme à l'invention et tel que mentionné ci-dessus, l'écran étant entraîné en déplacement par l'actionneur électromécanique.

Ce dispositif d'occultation présente des caractéristiques et avantages analogues à ceux décrits précédemment, en relation avec l'actionneur électromécanique selon l'invention.

D'autres particularités et avantages de l'invention apparaîtront encore dans la description ci-après, faite en référence aux dessins annexés, donnés à titre d'exemples non limitatifs et dans lesquels :
[Fig 1] la figure 1 est une vue schématique en coupe transversale d'une installation d'occultation comprenant un dispositif d'occultation conforme à un mode de réalisation de l'invention ;
[Fig 2] la figure 2 est une vue schématique en perspective de l'installation d'occultation illustrée à la figure 1 ;
[Fig 3] la figure 3 est une vue schématique en perspective d'un actionneur électromécanique du dispositif d'occultation illustré aux figures 1 et 2 ;
[Fig 4] la figure 4 est une vue schématique en coupe partielle de l'actionneur électromécanique illustré à la figure 3, selon un plan de coupe passant par un axe de rotation de l'actionneur électromécanique, cette vue schématique étant interrompue localement au niveau de deux parties de l'actionneur électromécanique, et un carter de l'actionneur électromécanique ayant été ôté ;
[Fig 5] la figure 5 est une vue schématique en perspective et éclatée d'une partie de l'actionneur électromécanique illustré aux figures 3 et 4, représentant une partie d'un carter, une partie d'un réducteur, un arbre de sortie et un couvercle d'extrémité ;
[Fig 6] la figure 6 est une première vue schématique en coupe et en perspective d'une partie de l'actionneur électromécanique illustré aux figures 3 à 5, selon une première orientation d'un plan de coupe passant par l'axe de rotation de l'actionneur électromécanique, représentant l'assemblage du couvercle d'extrémité par rapport au carter, au réducteur et à l'arbre de sortie ;
[Fig 7] la figure 7 est une deuxième vue schématique en coupe et en perspective d'une partie de l'actionneur électromécanique illustré aux figures 3 à 6, selon une deuxième orientation du plan de coupe passant par l'axe de rotation de l'actionneur électromécanique, représentant l'assemblage du couvercle d'extrémité par rapport au carter, au réducteur et à l'arbre de sortie, la deuxième orientation du plan de coupe étant orthogonale à la première orientation du plan de coupe ; et
[Fig 8] la figure 8 est une vue schématique de face du couvercle d'extrémité illustré aux figures 3 à 7.

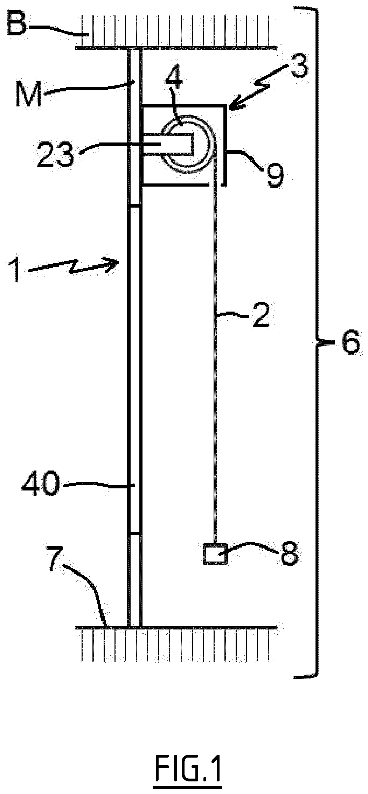

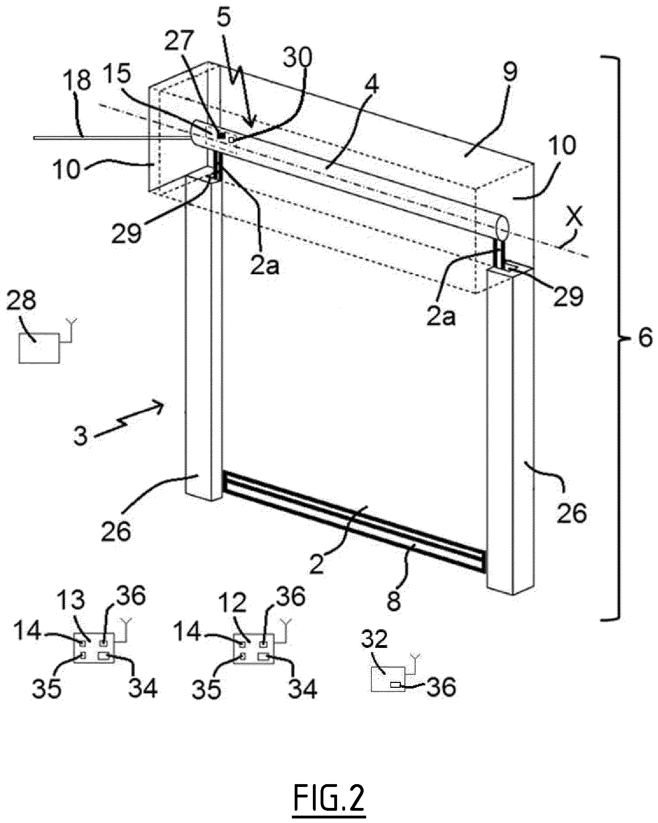

On décrit tout d'abord, en référence aux figures 1 et 2, une installation d'occultation 6 conforme à un mode de réalisation de l'invention. Cette installation d'occultation 6 comprend au moins un dispositif d'occultation 3. Cette installation d'occultation 6, installée dans un bâtiment B, comporte au moins une ouverture 1, dans laquelle est disposée une fenêtre 40 ou une porte, non représentée. Cette installation d'occultation 6 est équipée d'un écran 2 appartenant au dispositif d'occultation 3, en particulier un store motorisé. L'écran 2 est configuré pour se déplacer, autrement dit se déplace, en vis-à-vis de la fenêtre 40 ou de la porte.

Une installation de fermeture et une installation de protection solaire sont des exemples d'installations d'occultation. De même, un dispositif de fermeture et un dispositif de protection solaire sont des exemples de dispositifs d'occultation.

L'installation de fermeture, d'occultation ou de protection solaire est par la suite appelée « installation d'occultation » 6.

Le dispositif de fermeture, d'occultation ou de protection solaire est par la suite appelé « dispositif d'occultation » 3. Le dispositif d'occultation 3 comprend l'écran 2.

Le dispositif d'occultation 3 peut être un store, notamment un store comprenant une toile enroulable, une toile plissée ou alvéolée, ou des lames pouvant être orientables, un volet roulant ou un porte enroulable. La présente invention s'applique à tous les types de dispositif d'occultation 3, pouvant être disposés soit à l'intérieur du bâtiment B, soit à l'extérieur du bâtiment B, soit avec une première partie des dispositifs d'occultation 3 disposée à l'intérieur du bâtiment B et avec une deuxième partie des dispositifs d'occultation 3 disposée à l'extérieur du bâtiment B.

Ici, l'installation d'occultation 6 comprend le dispositif d'occultation 3.

On décrit, en référence aux figures 1 et 2, un store motorisé enroulable qui forme un dispositif d'occultation 3.

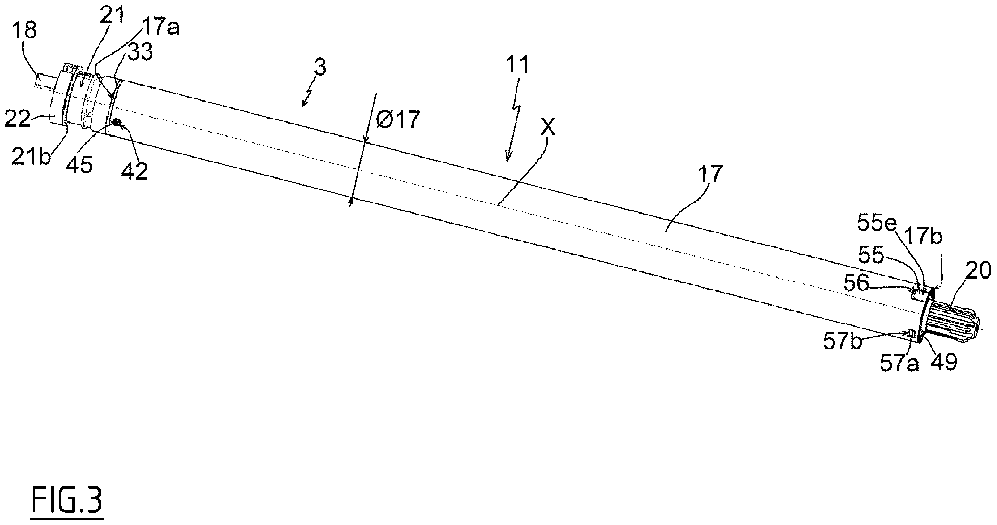

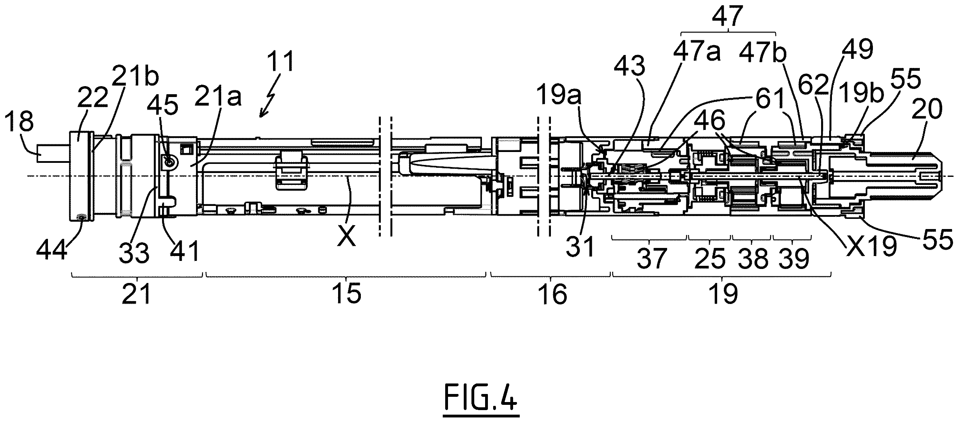

Avantageusement, le dispositif d'occultation 3 comprend un dispositif d'entraînement motorisé 5. Le dispositif d'entraînement motorisé 5 comprend un actionneur électromécanique 11 illustré aux figures 3 et 4.

L'écran 2 est configuré pour être déplacé, autrement dit est déplacé, au moyen du dispositif d'entraînement motorisé 5 et, plus particulièrement, de l'actionneur électromécanique 11.

Ici, le dispositif d'entraînement motorisé 5 et, par conséquent, le dispositif d'occultation 3 comprend, en outre, un tube d'enroulement 4. En outre, le tube d'enroulement 4 est agencé de sorte à être entraîné en rotation par l'actionneur électromécanique 11.

Ici, l'écran 2 est enroulable sur le tube d'enroulement 4.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

Avantageusement, le dispositif d'occultation 3 comprend un dispositif de maintien 9, 23.

Avantageusement, le dispositif de maintien 9, 23 peut comprendre deux supports 23. Un support 23 est disposé à chaque extrémité du tube d'enroulement 4, en particulier dans une configuration assemblée du dispositif d'occultation 3.

Ainsi, le tube d'enroulement 4 est maintenu par l'intermédiaire des supports 23. Un seul des supports 23 est visible à la figure 1 et ceux-ci ne sont pas représentés à la figure 2. Les supports 23 permettent de lier mécaniquement le dispositif d'occultation 3 à la structure du bâtiment B, notamment à un mur M du bâtiment B.

Avantageusement, le dispositif de maintien 9, 23 peut comprendre un caisson 9. En outre, le tube d'enroulement 4 et au moins une partie de l'écran 2 sont logés à l'intérieur du caisson 9, en particulier dans la configuration assemblée du dispositif d'occultation 3.

De manière générale, le caisson 9 est disposé au-dessus de l'ouverture 1, ou encore en partie supérieure de l'ouverture 1.

Ici et comme illustré à la figure 1, les supports 23 sont également logés à l'intérieur du caisson 9.

Avantageusement, le caisson 9 comprend deux joues 10, telles qu'illustrées à la figure 2. Une joue 10 est disposée à chaque extrémité du caisson 9, en particulier dans la configuration assemblée du dispositif d'occultation 3.

En variante, représentée à la figure 2, le tube d'enroulement 4 est maintenu par l'intermédiaire du caisson 9, en particulier par l'intermédiaire des joues 10 du caisson 9, sans utiliser des supports, tels que les supports 23 mentionnés ci-dessus.

Avantageusement, le dispositif d'occultation 3 peut également comprendre deux coulisses latérales 26, comme illustré uniquement à la figure 2. Chaque coulisse latérale 26 comprend une gorge 29. Chaque gorge 29 de l'une des coulisses latérales 26 coopère, autrement dit est configurée pour coopérer, avec un bord latéral 2a de l'écran 2, en particulier dans la configuration assemblée du dispositif d'occultation 3, de sorte à guider l'écran 2, lors de l'enroulement et du déroulement de l'écran 2 autour du tube d'enroulement 4.

L'actionneur électromécanique 11 est, par exemple, de type tubulaire. Celui-ci permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

Avantageusement, le dispositif d'occultation 3 comprend, en outre, une barre de charge 8 pour exercer une tension sur l'écran 2.

Le store enroulable, qui forme le dispositif d'occultation 3, comporte une toile, formant l'écran 2 du store enroulable 3. Une première extrémité de l'écran 2, en particulier l'extrémité supérieure de l'écran 2, dans la configuration assemblée du dispositif d'occultation 3, est fixée au tube d'enroulement 4. En outre, une deuxième extrémité de l'écran 2, en particulier l'extrémité inférieure de l'écran 2, dans la configuration assemblée du dispositif d'occultation 3, est fixée à la barre de charge 8.

Ici, la toile formant l'écran 2 est réalisée à partir d'un matériau textile.

Dans un exemple de réalisation, non représenté, la première extrémité de l'écran 2 présente un ourlet au travers duquel est disposée une tige, en particulier en matière plastique. Cet ourlet réalisé au niveau de la première extrémité de l'écran 2 est obtenu au moyen d'une couture de la toile formant l'écran 2. Lors de l'assemblage de l'écran 2 sur le tube d'enroulement 4, l'ourlet et la tige situés au niveau de la première extrémité de l'écran 2 sont insérés par coulissement dans une rainure ménagée sur la face externe du tube d'enroulement 4, en particulier sur toute la longueur du tube d'enroulement 4, de sorte à solidariser l'écran 2 avec le tube d'enroulement 4 et à pouvoir enrouler et dérouler l'écran 2 autour du tube d'enroulement 4.

Le mode de fixation de l'écran 2 sur le tube d'enroulement 4 n'est pas limitatif et peut être différent. Il peut être mis en oeuvre, par exemple, au moyen d'un adhésif ou d'une ou plusieurs articulations fixées, notamment par vissage ou par rivetage, au tube d'enroulement 4.

Quel que soit le mode de réalisation, la première extrémité de l'écran 2 est disposée au niveau du dispositif de maintien 9, 23.

Dans le cas d'un store enroulable, la position haute enroulée correspond à une position de fin de course haute prédéterminée, ou encore à la mise en appui de la barre de charge 8 de l'écran 2 contre un bord du caisson 9 du store enroulable 3, et la position basse déroulée correspond à une position de fin de course basse prédéterminée, ou à la mise en appui de la barre de charge 8 de l'écran 2 contre un seuil 7 de l'ouverture 1, ou encore au déroulement complet de l'écran 2.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment B.

Le dispositif d'entraînement motorisé 5 est, de préférence, configuré pour exécuter les commandes de déplacement, notamment de déroulement ou d'enroulement, de l'écran 2 du dispositif d'occultation 3, pouvant être émises, notamment, par l'unité de commande locale 12 ou l'unité de commande centrale 13.

L'installation d'occultation 6 comprend soit l'unité de commande locale 12, soit l'unité de commande centrale 13, soit l'unité de commande locale 12 et l'unité de commande centrale 13.

On décrit à présent, plus en détail et en référence aux figures 2 à 4, le dispositif d'entraînement motorisé 5, y compris l'actionneur électromécanique 11, appartenant à l'installation d'occultation 6 et, plus particulièrement, au dispositif d'occultation 3 illustré aux figures 1 et 2.

L'actionneur électromécanique 11 comprend un carter 17, en particulier tubulaire, un moteur électrique 16, un réducteur 19 et un arbre de sortie 20.

Ici, le carter 17 est creux. Le carter 17 comprend une première extrémité 17a et une deuxième extrémité 17b. La deuxième extrémité 17b est opposée à la première extrémité 17a.

Ici, le carter 17 de l'actionneur électromécanique 11 est de forme cylindrique, notamment de révolution autour de l'axe de rotation X, et est ouvert à chacune de ses extrémités 17a, 17b.

Avantageusement, le carter 17 est un tube présentant une section circulaire.

Ici, le carter 17 est réalisé dans un matériau métallique.

La matière du carter de l'actionneur électromécanique n'est pas limitative et peut être différente. Il peut s'agir, en particulier, d'une matière plastique.

Avantageusement, le carter 17 présente une épaisseur E.

Avantageusement, le carter 17 comprend une surface intérieure 17c et une surface extérieure 17d. La surface intérieure 17c est opposée à la surface extérieure 17d.

Ici, l'épaisseur E du carter 17 est définie par une distance entre la surface intérieure 17c et la surface extérieure 17d du carter 17, selon une direction radiale à l'axe de rotation X.

Avantageusement, le carter 17 est recouvert d'une couche de peinture, non représentée, déposée au moins sur la surface extérieure 17d du carter 17.

Ici, le moteur électrique 16 et le réducteur 19 sont logés, autrement dit sont montés, à l'intérieur du carter 17, en particulier dans une configuration assemblée de l'actionneur électromécanique 11.

Le moteur électrique 16 est représenté par son enveloppe à la figure 4, sans détails sur ses éléments constitutifs internes.

Avantageusement, le moteur électrique 16 comprend un rotor et un stator, non représentés.

Avantageusement, le rotor et le stator sont positionnés de manière coaxiale autour de l'axe de rotation X.

Avantageusement, le moteur électrique 16 peut être de type sans balais à commutation électronique, appelé également « BLDC » (acronyme du terme anglo-saxon BrushLess Direct Current) ou « synchrone à aimants permanents », de type à courant continu ou de type asynchrone.

Le réducteur 19 est assemblé, autrement dit est configuré pour être assemblé, avec l'arbre de sortie 20, en particulier dans la configuration assemblée de l'actionneur électromécanique 11.

Avantageusement, le réducteur 19 comprend au moins un étage de réduction 37, 38, 39. L'étage de réduction 37, 38, 39, l'un des étages de réduction 37, 38, 39 ou chaque étage de réduction 37, 38, 39 est de type épicycloïdal.

Ici et comme illustré à la figure 4, le réducteur 19 comprend trois étages de réduction 37, 38, 39. Chacun des trois étages de réduction 37, 38, 39 est de type épicycloïdal. Les trois étages de réduction 37, 38, 39 sont appelés par la suite premier étage de réduction 37, deuxième étage de réduction 38 et troisième étage de réduction 39.

Le nombre d'étages de réduction du réducteur n'est pas limitatif. Le nombre d'étages de réduction peut être de un, de deux ou supérieur ou égal à quatre.

Avantageusement, l'actionneur électromécanique 11 comprend, en outre, un frein 25.

Le frein 25 est configuré pour freiner et/ou pour bloquer en rotation l'arbre de sortie 20 de l'actionneur électromécanique 11, de sorte à réguler la vitesse de rotation du tube d'enroulement 4, lors d'un déplacement de l'écran 2, et à maintenir bloqué le tube d'enroulement 4, lorsque l'actionneur électromécanique 11 est désactivé électriquement.

Avantageusement, le frein 25 est logé, autrement dit est monté, à l'intérieur du carter 17 de l'actionneur électromécanique 11, en particulier dans la configuration assemblée de l'actionneur électromécanique 11.

Ici, le frein 25 est un frein à ressort.

Avantageusement, le frein 25 est configuré pour être disposé, autrement dit est disposé, entre deux étages de réduction 37, 38, 39, en particulier entre le premier étage de réduction 37 et le deuxième étage de réduction 38 du réducteur 19, en particulier dans la configuration assemblée de l'actionneur électromécanique 11, représentée à la figure 4.

Avantageusement, le réducteur 19 comprend une première extrémité 19a et une deuxième extrémité 19b. La deuxième extrémité 19b est opposée à la première extrémité 19a. La première extrémité 19a du réducteur 19 est disposée en face du moteur électrique 16, autrement dit fait face au moteur électrique 16, en particulier dans la configuration assemblée de l'actionneur électromécanique 11. En outre, la deuxième extrémité 19b du réducteur 19 est disposée en face de l'arbre de sortie 20 de l'actionneur électromécanique 11, autrement dit fait face à l'arbre de sortie 20 de l'actionneur électromécanique 11, en particulier dans la configuration assemblée de l'actionneur électromécanique 11

Ici, le premier étage de réduction 37 est disposé au niveau de la première extrémité 19a du réducteur 19. Le troisième étage de réduction 39 est disposé au niveau de la deuxième extrémité 19b du réducteur 19. En outre, le deuxième étage de réduction 38 est disposé entre le premier étage de réduction 37 et le troisième étage de réduction 39 et, plus particulièrement entre le frein 25 et le troisième étage de réduction 39.

Avantageusement, l'un ou chacun des premier, deuxième et troisième étages de réduction 37, 38, 39 comprend un pignon solaire 46 et une pluralité de pignons satellites 61, en l'occurrence au nombre de trois.

Le nombre de pignons satellites des premier, deuxième et troisième étages de réduction n'est pas limitatif et peut être différent. Le nombre de pignons satellites d'un étage de réduction peut être de deux ou plus.

Avantageusement, le réducteur 19 comprend, en outre, un boîtier 47.

Ici et comme illustré à la figure 4, le boîtier 47 comprend une première partie 47a et un deuxième partie 47b. La première partie 47a du boîtier 47 est disposée du côté de la première extrémité 19a du réducteur 19. En outre, la deuxième partie 47b du boîtier 47 est disposée du côté de la deuxième extrémité 19b du réducteur 19.

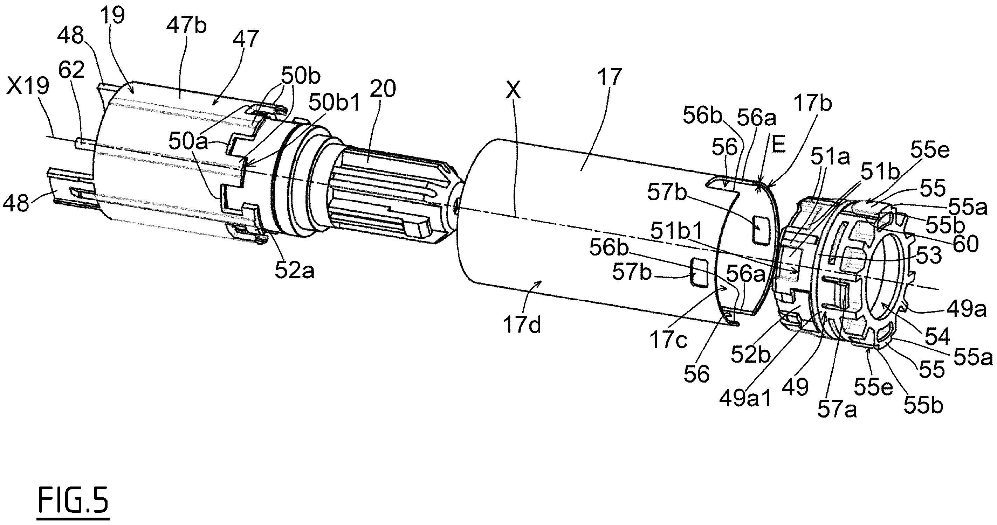

Avantageusement, la première partie 47a du boîtier 47 est fixée, autrement dit est configurée pour être fixée, à la deuxième partie 47b du boîtier 47, au moyen d'éléments de fixation 48, en particulier dans une configuration assemblée du réducteur 19. Seuls les éléments de fixation 48 de la deuxième partie 47b du boîtier 47 sont représentés à la figure 5.

Avantageusement, les éléments de fixation 48 sont des éléments de fixation par encliquetage élastique, au nombre de deux et disposés de façon diamétralement opposée par rapport à un axe de rotation X19 du réducteur 19, autrement dit à 180° l'un par rapport à l'autre, autour de l'axe de rotation X19.

Le nombre et le type des éléments de fixation ne sont pas limitatifs et peuvent être différents. Ils peuvent être, par exemple, au nombre de trois et disposés avec un angle de 120° l'un par rapport à l'autre, autour de l'axe de rotation du réducteur. Ils peuvent également être, par exemple, des éléments de fixation par vissage.

Ici, le premier étage de réduction 37 est logé, autrement dit est monté, dans la première partie 47a du boîtier 47, en particulier dans la configuration assemblée du réducteur 19. En outre, les deuxième et troisième étages de réduction 38, 39, sont logés, autrement dit sont montés, dans la deuxième partie 47b du boîtier 47, en particulier dans la configuration assemblée du réducteur 19.

En variante, non représentée, le boîtier 47 est réalisé en une seule partie. Dans ce cas, l'ensemble des étages de réduction 37, 38, 39 du réducteur 19 sont logés, autrement dit sont montés, dans la seule et même partie du boîtier 47, en particulier dans la configuration assemblée du réducteur 19.

Dans une autre variante, non représentée, le boîtier 47 comprend autant de parties que le réducteur 19 comprend d'étages de réduction 37, 38, 39. Dans ce cas, chaque partie du boîtier 47 est fixée, autrement dit est configurée pour être fixée, à une partie adjacente du boîtier 47, au moyen d'éléments de fixation, en particulier dans la configuration assemblée du réducteur 19.

Avantageusement, dans la configuration assemblée du réducteur 19, le frein 25 est maintenu, autrement dit est configuré pour être maintenu, par les première et deuxième parties 47a, 47b du boîtier 47, au moyen d'éléments d'indexation, non représentés.

Avantageusement, les éléments d'indexation sont des éléments de blocage en rotation, autour de l'axe de rotation X19, tels que des éléments en saillie coopérant avec des échancrures de forme correspondante. Ces éléments d'indexation sont au nombre de deux et disposés de façon diamétralement opposée par rapport à l'axe de rotation X19, autrement dit à 180° l'un par rapport à l'autre, autour de l'axe de rotation X19.

Le nombre et le type des éléments d'indexation ne sont pas limitatifs et peuvent être différents. Ils peuvent être, par exemple, au nombre de trois et disposés avec un angle de 120° l'un par rapport à l'autre, autour de l'axe de rotation du réducteur.

Avantageusement, le réducteur 19 comprend, en outre, un arbre d'entrée 43.

Ici et comme illustré à la figure 4, l'arbre d'entrée 43 du réducteur 19 et constitué par un arbre du pignon solaire 46 du premier étage de réduction 37.

En variante, non représentée, le pignon solaire 46 du premier étage de réduction 37 est porté par l'arbre d'entrée 43 du réducteur 19.

Ainsi, quel que soit l'exemple de réalisation, le pignon solaire 46 du premier étage de réduction 37 est solidaire de l'arbre d'entrée 43 du réducteur 19.

Avantageusement, le réducteur 19 comprend, en outre, un arbre de sortie 62.

Ici, l'arbre de sortie 62 du réducteur 19 est disposé, autrement dit est configuré pour être disposé, à l'intérieur de l'arbre de sortie 20 de l'actionneur électromécanique 11, en particulier dans la configuration assemblée de l'actionneur électromécanique 11.

En variante, non représentée, l'arbre de sortie 20 de l'actionneur électromécanique 11 constitue l'arbre de sortie 62 du réducteur 19.

Avantageusement, l'arbre d'entrée 43 et l'arbre de sortie 62 du réducteur 19 sont coaxiaux, autrement dit sont configurés pour être coaxiaux, en particulier dans la configuration assemblée du réducteur 19.

Ainsi, l'arbre d'entrée 43 et l'arbre de sortie 62 du réducteur 19 sont disposés suivant un même axe de rotation, qui est également l'axe de rotation X19 du réducteur 19, en particulier dans la configuration assemblée du réducteur 19.

Avantageusement, l'arbre de sortie 20 de l'actionneur électromécanique 11 est disposé, autrement dit est configuré pour être disposé, au voisinage de la deuxième extrémité 17b du carter 17, en particulier dans la configuration assemblée de l'actionneur électromécanique 11.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Avantageusement, une extrémité de l'arbre de sortie 20 de l'actionneur électromécanique 11 est en saillie par rapport au carter 17 de l'actionneur électromécanique 11, en particulier par rapport à la deuxième extrémité 17b du carter 17.

Avantageusement, l'arbre de sortie 20 de l'actionneur électromécanique 11 est configuré pour entraîner en rotation un élément de liaison, non représenté, relié au tube d'enroulement 4. L'élément de liaison est, par exemple, réalisé sous la forme d'une roue.

Lors de la mise en fonctionnement de l'actionneur électromécanique 11, le moteur électrique 16 et le réducteur 19 entraînent en rotation l'arbre de sortie 20 de l'actionneur électromécanique 11. En outre, l'arbre de sortie 20 de l'actionneur électromécanique 11 entraîne en rotation le tube d'enroulement 4 par l'intermédiaire de l'élément de liaison.

Ainsi, le tube d'enroulement 4 entraîne en rotation l'écran 2 du dispositif d'occultation 3, de sorte à ouvrir ou fermer l'ouverture 1.

Avantageusement, l'actionneur électromécanique 11 comprend, en outre, un dispositif de transmission de couple 31.

Le dispositif de transmission de couple 31 est logé, autrement dit est monté, à l'intérieur du carter 17 de l'actionneur électromécanique 11, en particulier dans la configuration assemblée de l'actionneur électromécanique 11.

Ici, l'arbre d'entrée 43 du réducteur 19 est accouplé, autrement dit est configuré pour être accouplé, avec le rotor du moteur électrique 16 par l'intermédiaire du dispositif de transmission de couple 31, en particulier dans la configuration assemblée de l'actionneur électromécanique 11.

Des moyens de commande de l'actionneur électromécanique 11, permettant le déplacement de l'écran 2 du dispositif d'occultation 3, sont constitués par au moins une unité de contrôle 15, en particulier une unité électronique de contrôle.

Cette unité de contrôle 15 appartient au dispositif d'entraînement motorisé 5 et, plus particulièrement, à l'actionneur électromécanique 11 et est apte à mettre en fonctionnement le moteur électrique 16 de l'actionneur électromécanique 11 et, en particulier, à permettre l'alimentation en énergie électrique du moteur électrique 16.

Ainsi, l'unité de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 30, comme illustré à la figure 2.

Avantageusement, l'unité de contrôle 15 comprend, en outre, un premier module de communication 27, comme illustré à la figure 2, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité de contrôle 15 est de type sans fil. En particulier, le premier module de communication 27 est configuré pour recevoir des ordres de commande radioélectriques.

Avantageusement, le premier module de communication 27 peut également permettre la réception d'ordres de commande transmis par des moyens filaires.

Avantageusement, l'unité de contrôle 15, l'unité de commande locale 12 et/ou l'unité de commande centrale 13 peuvent être en communication avec une station météorologique, non représentée, disposée à l'intérieur du bâtiment B ou déportée à l'extérieur du bâtiment B, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment B.

Avantageusement, l'unité de contrôle 15, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

L'unité de contrôle 15 peut être commandée à partir de l'unité de commande locale 12 et/ou de l'unité de commande centrale 13. L'unité de commande locale 12 et/ou l'unité de commande centrale 13 est pourvue d'un clavier de commande. Le clavier de commande de l'unité de commande locale 12 ou de l'unité de commande centrale 13 comprend un ou plusieurs éléments de sélection 14 et, éventuellement, un ou plusieurs éléments d'affichage 34.

A titre d'exemples nullement limitatifs, les éléments de sélection peuvent être des boutons poussoirs et/ou des touches sensitives. Les éléments d'affichage peuvent être des diodes électroluminescentes et/ou un afficheur, par exemple LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, l'unité de commande locale 12 et/ou l'unité de commande centrale 13 comprend au moins un deuxième module de communication 36.

Ainsi, le deuxième module de communication 36 de l'unité de commande locale 12 ou de l'unité de commande centrale 13 est configuré pour émettre, autrement dit émet, des ordres de commande, en particulier par des moyens sans fil, par exemple radioélectriques, et/ou par des moyens filaires.

En outre, le deuxième module de communication 36 de l'unité de commande locale 12 ou de l'unité de commande centrale 13 peut également être configuré pour recevoir, autrement dit reçoit, des ordres de commande, en particulier par l'intermédiaire des mêmes moyens.

Avantageusement, le deuxième module de communication 36 de l'unité de commande locale 12 ou de l'unité de commande centrale 13 est configuré pour communiquer, autrement dit communique, avec le premier module de communication 27 de l'unité de contrôle 15.

Ainsi, le deuxième module de communication 36 de l'unité de commande locale 12 ou de l'unité de commande centrale 13 échange des ordres de commande avec le premier module de communication 27 de l'unité de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade du mur M du bâtiment B ou sur une face d'un cadre dormant de la fenêtre 40 ou d'une porte. Un point de commande nomade peut être une télécommande, un téléphone intelligent ou une tablette.

Avantageusement, l'unité de commande locale 12 et/ou l'unité de commande centrale 13 comprend, en outre, un contrôleur 35.

Le dispositif d'entraînement motorisé 5, en particulier l'unité de contrôle 15, est, de préférence, configuré pour exécuter des ordres de commande de déplacement, notamment de fermeture, ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou de l'unité de commande centrale 13.

Avantageusement, l'installation d'occultation 6 comprend, en outre, au moins un capteur 32.

Avantageusement, le capteur 32 comprend au moins un deuxième module de communication 36, tel que celui décrit en référence à l'unité de commande locale 12 ou à l'unité de commande centrale 13. En outre, le deuxième module de communication 36 du capteur 32 est configuré pour communiquer, autrement dit communique, avec le premier module de communication 27 de l'unité de contrôle 15.

Avantageusement, le capteur 32 peut être, par exemple, un capteur d'éclairement, un capteur de température, un capteur d'humidité ou un capteur de vent.

Ainsi, le dispositif d'entraînement motorisé 5 peut également être contrôlé automatiquement par la réception d'un ordre de commande correspondant à au moins un signal provenant du capteur 32.

En complément ou en variante, le dispositif d'entraînement motorisé 5 peut également être contrôlé automatiquement par la réception d'un ordre de commande correspondant à au moins un signal provenant d'une horloge, non représentée, de l'unité de contrôle 15, en particulier du microcontrôleur 30.

En complément ou en variante, le capteur 32 et/ou l'horloge peuvent être intégrés à l'unité de commande locale 12 ou à l'unité de commande centrale 13.

Avantageusement, l'actionneur électromécanique 11 comprend, en outre, une couronne, non représentée, pouvant également être appelée manchon.

La couronne est disposée, autrement dit est configurée pour être disposée, au voisinage de la première extrémité 17a du carter 17, en particulier dans la configuration assemblée de l'actionneur électromécanique 11.

La couronne constitue, autrement dit est configurée pour constituer, un palier de guidage en rotation du tube d'enroulement 4, autour du carter 17 de l'actionneur électromécanique 11, en particulier dans une configuration assemblée du dispositif d'entraînement motorisé 5 et, par conséquent, du dispositif d'occultation 3.

Avantageusement, l'actionneur électromécanique 11 et, plus particulièrement, l'unité de contrôle 15 comprend, en outre, un dispositif de détection de fins de course et/ou d'obstacle, lors du déplacement de l'écran 2. Ce dispositif peut être mécanique ou électronique.

Avantageusement, le dispositif de détection de fins de course et/ou d'obstacle est mis en oeuvre au moyen du microcontrôleur 30 de l'unité de contrôle 15 et, en particulier, au moyen d'un algorithme mis en oeuvre par ce microcontrôleur 30.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen de la couronne. La couronne permet ainsi de réaliser un palier. La deuxième liaison pivot, non représentée, est réalisée au niveau d'une deuxième extrémité du tube d'enroulement 4, opposée à la première extrémité.

Avantageusement, l'actionneur électromécanique 11 comprend, en outre, un support de couple 21.

Ici, le support de couple 21 est disposé au niveau de la première extrémité 17a du carter 17 de l'actionneur électromécanique 11, en particulier dans la configuration assemblée de l'actionneur électromécanique 11.

Le support de couple 21 permet de reprendre les efforts exercés par l'actionneur électromécanique 11, en particulier le couple exercé par l'actionneur électromécanique 11, par rapport à la structure du bâtiment B. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment B.

Ainsi, le support de couple 21 permet de fixer l'actionneur électromécanique 11 sur le dispositif de maintien 9, 23, en particulier à l'un des supports 23 ou à l'une des joues 10 du caisson 9.

Avantageusement, le support de couple 21 est en saillie au niveau de la première extrémité 17a du carter 17 de l'actionneur électromécanique 11.

Avantageusement, le support de couple 21 obture, autrement dit est configuré pour obturer, la première extrémité 17a du carter 17, en particulier dans la configuration assemblée de l'actionneur électromécanique 11.

Par ailleurs, le support de couple 21 de l'actionneur électromécanique 11 peut permettre de supporter au moins une partie de l'unité de contrôle 15.

Avantageusement, le support de couple 21 est fixé au carter 17 au moyen d'un ou plusieurs éléments de fixation, en particulier dans la configuration assemblée de l'actionneur électromécanique 11.

Le ou les éléments de fixation peuvent être, notamment, des bossages, des vis de fixation, des rivets, des éléments de fixation par encliquetage élastique, des crans emmanchés dans des échancrures ou une combinaison de ces différents éléments de fixation.

Ici, le support de couple 21 comprend un cran 41, pouvant être appelé deuxième cran 41, en particulier en forme de saillie radiale, tel qu'illustré à la figure 4. Le carter 17 comprend une échancrure, non représentée, pouvant être appelée deuxième échancrure. L'échancrure est ménagée au niveau de la première extrémité 17a du carter 17. En outre, le cran 41 du support de couple 21 est configuré pour être emmanché, autrement dit est emmanché, dans l'échancrure du carter 17, en particulier dans la configuration assemblée de l'actionneur électromécanique 11.

Ainsi, un tel assemblage du support de couple 21 et du carter 17 permet de bloquer en rotation le support de couple 21 par rapport au carter 17, autour de l'axe de rotation X.

En variante, non représentée, le support de couple 21 comprend deux crans 41, qui sont diamétralement opposés par rapport à l'axe de rotation X. En outre, le carter 17 comprend alors deux échancrures, qui sont également diamétralement opposées par rapport à l'axe de rotation X.

Avantageusement, le support de couple 21 et le carter 17 sont fixés, autrement dit sont configurés pour être fixés, entre eux, au moyen d'éléments de fixation, en particulier dans la configuration assemblée de l'actionneur électromécanique 11.

Ainsi, la fixation du support de couple 21 au carter 17 permet de bloquer en translation le support de couple 21 par rapport au carter 17, au voisinage de la première extrémité 17a du carter 17, suivant la direction de l'axe de rotation X.

Avantageusement, les éléments de fixation du support de couple 21 avec le carter 17 sont des éléments de fixation par vissage.

Ici, la fixation du support de couple 21 avec le carter 17 est mise en oeuvre au moyen de vis de fixation, non représentées, en particulier au nombre de deux et pouvant être, par exemple, de type auto-taraudeuse. Dans la configuration assemblée de l'actionneur électromécanique 11, chaque vis de fixation traverse un trou de passage 42 ménagé dans le carter 17 et est vissée dans un trou de fixation 45 du support de couple 21. Par ailleurs, chaque vis de fixation peut traverser un trou de passage, non représenté, ménagé dans la couronne.

Le nombre de vis de fixation n'est pas limitatif et peut être différent. Il peut être, par exemple, de un ou supérieur ou égal à trois.

Avantageusement, le support de couple 21 comprend une première partie 21a, pouvant également être appelée « point fixe », et une deuxième partie 21b, pouvant également être appelée « tête d'actionneur ».

Avantageusement, la première partie 21a du support de couple 21 est assemblée, autrement dit est configurée pour être assemblée, avec le carter 17, en particulier dans la configuration assemblée de l'actionneur électromécanique 11. En outre, la deuxième partie 21b du support de couple 21 est configurée pour être assemblée, autrement dit est assemblée, avec le dispositif de maintien 9, 23, en particulier dans une configuration assemblée de l'actionneur électromécanique 11 dans le dispositif d'occultation 3.

Dans un exemple de réalisation, la deuxième partie 21b du support de couple 21 est assemblée, autrement dit est configurée pour être assemblée, sur la première partie 21a du support de couple 21, en particulier dans la configuration assemblée de l'actionneur électromécanique 11. Dans ce cas, la deuxième partie 21b du support de couple 21 est assemblée sur la première partie 21a du support de couple 21 au moyen d'éléments d'assemblage.

Ainsi, le support de couple 21 est constitué d'au moins deux pièces distinctes formant chacune respectivement les première et deuxième parties 21a, 21b du support de couple 21.

De cette manière, la deuxième partie 21b du support de couple 21 peut être interchangeable par rapport à la première partie 21a du support de couple 21, notamment en fonction de la forme et du type des éléments de maintien, non représentés, du dispositif de maintien 9, 23.

Dans un autre exemple de réalisation, le support de couple 21 peut être constitué d'une seule pièce formant les première et deuxième parties 21a, 21b du support de couple 21. Ainsi, le support de couple 21 est réalisé au moyen d'une pièce monobloc.

Avantageusement, la deuxième partie 21b du support de couple 21 peut présenter différentes formes extérieures, notamment une forme cannelée, dite « en étoile », autrement dit comprenant des reliefs sur son contour, ou une forme ronde, autrement dit dépourvue de reliefs sur son contour.

Avantageusement, au moins une portion de la première partie 21a du support de couple 21 est de forme générale cylindrique et est disposée, autrement dit est configurée pour être disposée, à l'intérieur du carter 17, en particulier dans la configuration assemblée de l'actionneur électromécanique 11.

Avantageusement, un diamètre extérieur d'au moins une portion de la deuxième partie 21b du support de couple 21 est supérieur à un diamètre extérieur QJ17 du carter 17.

Avantageusement, le support de couple 21 comprend, en outre, une butée 33. En outre, la butée 33 est en appui, autrement dit est configurée pour être en appui, contre le carter 17, au niveau de la première extrémité 17a du carter 17, en particulier dans la configuration assemblée de l'actionneur électromécanique 11.

Ainsi, la butée 33 du support de couple 21 permet de limiter l'enfoncement de la première partie 21a du support de couple 21 dans le carter 17, suivant la direction de l'axe de rotation X.

Ici, la butée 33 du support de couple 21 comprend un épaulement. Plus particulièrement, elle est réalisée sous la forme d'une collerette, en particulier de forme cylindrique et à génératrice rectiligne.

Avantageusement, la couronne est disposée, autrement dit est configurée pour être disposée, autour du support de couple 21, en particulier de la deuxième partie 21b du support de couple 21, notamment dans la configuration assemblée de l'actionneur électromécanique 11. Dans ce cas, la couronne est montée libre en rotation autour du support de couple 21, en particulier de la deuxième partie 21b du support de couple 21.

En variante, non représentée, la couronne est disposée, autrement dit est configurée pour être disposée, autour d'une partie du carter 17, en particulier dans la configuration assemblée de l'actionneur électromécanique 11. Dans ce cas, la couronne est montée libre en rotation autour du carter 17.

Dans une autre variante, non représentée, la couronne est disposée, autrement dit est configurée pour être disposée, d'une part, autour du support de couple 21 et, d'autre part, autour d'une partie du carter 17 de l'actionneur électromécanique 11, en particulier de la première extrémité 17a du carter 17, notamment dans la configuration assemblée de l'actionneur électromécanique 11. Dans un tel cas, la couronne est montée libre en rotation, d'une part, autour du support de couple 21 et, d'autre part, autour du carter 17 de l'actionneur électromécanique 11.

Avantageusement, le support de couple 21 comprend, en outre, un couvercle 22.

Le couvercle 22 est monté, autrement dit est configuré pour être monté, sur le support de couple 21, notamment sur les première et/ou deuxième parties 21a, 21b du support de couple 21, en particulier dans la configuration assemblée de l'actionneur électromécanique 11.

Avantageusement, l'unité de contrôle 15 est disposée au moins en partie à l'intérieur du carter 17 de l'actionneur électromécanique 11.

Par ailleurs, l'unité de contrôle 15 peut être disposée au moins en partie à l'extérieur du carter 17 de l'actionneur électromécanique 11 et, en particulier, montée dans le support de couple 21 ou dans l'un des supports 23.

Avantageusement, l'unité de contrôle 15 comprend une première carte électronique, non représentée, et, éventuellement, au moins une deuxième carte électronique, non représentée.

Dans un exemple de réalisation, la première carte électronique est disposée à l'intérieur du carter 17 de l'actionneur électromécanique 11, en particulier dans la configuration assemblée de l'actionneur électromécanique 11. En outre, la deuxième carte électronique est disposée à l'intérieur du support de couple 21 de l'actionneur électromécanique 11, en particulier dans la configuration assemblée de l'actionneur électromécanique 11.

Avantageusement, le support de couple 21 comprend, autrement dit intègre, au moins un dispositif de sélection 44, en particulier un bouton, pouvant être, par exemple, de type poussoir ou magnétique, dont un seul est représenté à la figure 4. En outre, le ou chaque dispositif de sélection 44 est configuré, notamment, pour réaliser un réglage de l'actionneur électromécanique 11 au travers d'un ou plusieurs modes de configuration, pour appairer avec l'actionneur électromécanique 11 une ou plusieurs unités de commande 12, 13, pour réinitialiser un ou plusieurs paramètres, pouvant être, par exemple, une position de fin de course, pour réinitialiser la ou les unités de commande 12, 13 appairées ou encore pour commander le déplacement de l'écran 2.

Avantageusement, le support de couple 21 comprend, autrement dit intègre, au moins un dispositif d'affichage, non représenté. En outre, le ou chaque dispositif d'affichage est configuré, notamment, pour afficher une indication visuelle, pouvant être, par exemple, représentative d'un mode de fonctionnement de l'actionneur électromécanique 11, en particulier un mode de configuration ou un mode de commande, ou encore d'un état d'un organe du dispositif d'entraînement motorisé 5.

Avantageusement, la première carte électronique est configurée pour contrôler le moteur électrique 16. En outre, la deuxième carte électronique est configurée pour, notamment, accéder à des fonctions de paramétrage et/ou de configuration de l'actionneur électromécanique 11, au moyen du ou de l'un des dispositifs de sélection 44 et, éventuellement, d'affichage.

En variante, non représentée, l'unité de contrôle 15 comprend une seule carte électronique. En outre, la carte électronique est configurée pour contrôler le moteur électrique 16 et, éventuellement, accéder à des fonctions de paramétrage et/ou de configuration de l'actionneur électromécanique 11, au moyen du ou des dispositifs de sélection 44 et, éventuellement, d'affichage.

Avantageusement, le dispositif d'entraînement motorisé 5 et, plus particulièrement, l'actionneur électromécanique 11 comprend, en outre, un câble d'alimentation électrique 18, comme illustré aux figures 2 à 4.

Avantageusement, l'unité de contrôle 15 peut être alimentée en énergie électrique au moyen du câble d'alimentation électrique 18 connecté électriquement à au moins une source d'alimentation en énergie électrique, non représentée, pouvant être, par exemple, un réseau d'alimentation en énergie électrique, notamment du secteur ou dit « PoE » (acronyme du terme anglo-saxon Power over Ethernet), et/ou à une batterie, qui peut être rechargeable, notamment au moyen d'un panneau photovoltaïque et/ou d'un chargeur, non représenté, ou au travers du réseau d'alimentation en énergie électrique.

Ainsi, le câble d'alimentation électrique 18 permet une alimentation en énergie électrique de l'actionneur électromécanique 11, en particulier de l'unité de contrôle 15 et du moteur électrique 16, à partir de la ou des source(s) d'alimentation en énergie électrique.

Ici, l'unité de contrôle 15, en particulier chacune des première et deuxième cartes électroniques, est alimentée en énergie électrique au moyen du câble d'alimentation électrique 18.

On décrit à présent, plus en détail et en référence aux figures 4 à 8, l'assemblage de la partie de l'actionneur électromécanique 11 du côté de l'arbre de sortie 20.

L'actionneur électromécanique 11 comprend, en outre, un couvercle d'extrémité 49.

Le réducteur 19, en particulier le boîtier 47, est assemblé, autrement dit est configuré pour être assemblé, avec le couvercle d'extrémité 49, en particulier dans la configuration assemblée de l'actionneur électromécanique 11.

Avantageusement, le couvercle d'extrémité 49 est fixé, autrement dit est configuré pour être fixé, au réducteur 19, en particulier au boîtier 47, au moyen d'éléments de fixation 52a, 52b, pouvant être appelés deuxièmes éléments de fixation 52a, 52b, en particulier dans la configuration assemblée de l'actionneur électromécanique 11.

Ici, chaque élément de fixation 52a appartient au boîtier 47 et chaque élément de fixation 52b appartient au couvercle d'extrémité 49.

Avantageusement, les éléments de fixation 52a, 52b sont des éléments de fixation par encliquetage élastique, au nombre de deux et disposés de façon diamétralement opposée par rapport à l'axe de rotation X, autrement dit à 180° l'un par rapport à l'autre, autour de l'axe de rotation X. Seuls l'un des éléments de fixation 52a et l'un des éléments de fixation 52b sont visibles à la figure 5.

Le nombre et le type des éléments de fixation ne sont pas limitatifs et peuvent être différents. Ils peuvent être, par exemple, au nombre de trois et disposés avec un angle de 120° l'un par rapport à l'autre, autour de l'axe de rotation.

Avantageusement, le réducteur 19, en particulier le boîtier 47, comprend des encoches 50a et des languettes 50b, autrement dit des créneaux, pouvant être appelées premières encoches 50a et premières languettes 50b, disposées alternativement autour de l'axe de rotation X. Le couvercle d'extrémité 49 comprend des languettes 51a et des encoches 51b, autrement dit des créneaux, pouvant être appelées deuxièmes languettes 51a et deuxièmes encoches 51b, disposées alternativement autour de l'axe de rotation X. En outre, les encoches 50a et les languettes 50b du réducteur 19 sont imbriquées, autrement dit sont configurées pour être imbriquées, dans les languettes 51a et les encoches 51b du couvercle d'extrémité 49, en particulier dans la configuration assemblée de l'actionneur électromécanique 11, comme illustré à la figure 5.

Ainsi, les languettes 50b du réducteur 19 sont configurées pour s'engager dans les encoches 51b du couvercle d'extrémité 49. En outre, les languettes 51a du couvercle d'extrémité 49 sont configurées pour s'engager dans les encoches 50a du réducteur 19.

Avantageusement, chacune des languettes 50b du réducteur 19 comprend une paroi d'extrémité 50b1. Chacune des encoches 51b du couvercle d'extrémité 49 comprend une paroi de fond 51b1. En outre, la paroi de fond 51b1 de l'une des encoches 51b du couvercle d'extrémité 49 est mise en appui, autrement dit est configurée pour être mise en appui, contre la paroi d'extrémité 50b1 de l'une des languettes 50b du réducteur 19, en particulier dans la configuration assemblée de l'actionneur électromécanique 11.

Ainsi, la mise en appui de la paroi de fond 51b1 des encoches 51b avec la paroi d'extrémité 50b1 des languettes 50b forme une butée de positionnement du réducteur 19, en particulier du boîtier 47, par rapport au couvercle d'extrémité 49, selon la direction de l'axe de rotation X.

De cette manière, la butée formée par la mise en appui de la paroi de fond 51b1 des encoches 51b avec la paroi d'extrémité 50b1 des languettes 50b permet, d'une part, de positionner le réducteur 19 à l'intérieur du carter 17, suivant la direction de l'axe de rotation X, et, d'autre part, de bloquer un déplacement en translation du réducteur 19 à l'intérieur du carter 17, suivant la direction de l'axe de rotation X et suite à l'assemblage de l'actionneur électromécanique 11.

Ici, le réducteur 19, en particulier le boîtier 47, comprend huit encoches 50a qui sont décalées angulairement d'un angle de 45°, autour de l'axe de rotation X. Le réducteur 19, en particulier le boîtier 47, comprend six languettes 50b et deux éléments de fixation 52a qui sont décalés angulairement d'un angle de 45°, autour de l'axe de rotation X. Chaque élément de fixation 52a est disposé entre deux séries de trois languettes 50b adjacentes. Le couvercle d'extrémité 49 comprend six encoches 51b et deux éléments de fixation 52b décalés angulairement d'un angle de 45°, autour de l'axe de rotation X. Chaque élément de fixation 52b est disposé entre deux séries de trois encoches 51b adjacentes. En outre, le couvercle d'extrémité 49 comprend huit languettes 51a décalées angulairement d'un angle de 45°, autour de l'axe de rotation X.

Le nombre et la position angulaire des encoches, des languettes et des éléments de fixation du réducteur et du couvercle d'extrémité ne sont pas limitatifs et peuvent être différents. Par exemple, dans le cas où le réducteur, en particulier le boîtier et le couvercle d'extrémité sont dépourvus d'éléments de fixation, les encoches et les languettes peuvent être au nombre de trois et décalées angulairement d'un angle de 120° autour de l'axe de rotation ou de quatre décalées angulairement d'un angle de 90° autour de l'axe de rotation.

Ici, les encoches 50a et les languettes 50b sont ménagées dans le réducteur 19, en particulier dans le boîtier 47, de sorte à réduire le nombre de pièces constituant le réducteur 19.

En variante, non représentée, les encoches 50a et les languettes 50b sont ménagées dans une pièce additionnelle, en particulier un embout. Dans ce cas, la pièce additionnelle est fixée, autrement dit est configurée pour être fixée, au boîtier 47 du réducteur 19, en particulier dans la configuration assemblée du réducteur 19.

Le couvercle d'extrémité 49 est disposé au niveau de la deuxième extrémité 17b du carter 17, en particulier dans la configuration assemblée de l'actionneur électromécanique 11. Sur la figure 5, seule une partie du carter 17 est représentée, à proximité de sa deuxième extrémité 17b.

Avantageusement, le couvercle d'extrémité 49 obture, autrement dit est configuré pour obturer, la deuxième extrémité 17b du carter 17, en particulier dans la configuration assemblée de l'actionneur électromécanique 11.

Avantageusement, le couvercle d'extrémité 49 comprend une ouverture centrale 54 de passage de l'arbre de sortie 20. En outre, l'arbre de sortie 20 est configuré pour s'étendre, autrement dit s'étend, de part et d'autre du couvercle d'extrémité 49 en passant au travers de l'ouverture centrale 54, en particulier dans la configuration assemblée de l'actionneur électromécanique 11.

Ici, l'ouverture centrale 54 du couvercle d'extrémité 49 est centrée sur l'axe de rotation X.

Ici, l'axe de rotation X de l'actionneur électromécanique 11 passe par un centre des organes 16, 19, 20, 21, 25, 49 montés au moins en partie à l'intérieur du carter 17, tels que le moteur électrique 16, le réducteur 19, l'arbre de sortie 20, le couvercle d'extrémité 49 et, éventuellement, le frein 25 et le support de couple 21.

Le couvercle d'extrémité 49 comprend au moins un cran 55, pouvant être appelé premier cran 55, en particulier en forme de saillie radiale, tel qu'illustré aux figures 4 à 6 et 8. Le carter 17 comprend au moins une échancrure 56, pouvant être appelée première échancrure 56. La ou chaque échancrure 56 est ménagée au niveau de la deuxième extrémité 17b du carter 17. En outre, le ou chaque cran 55 est configuré pour être emmanché, autrement dit est emmanché, dans la ou l'une des échancrures 56 du carter 17, en particulier dans la configuration assemblée de l'actionneur électromécanique 11.

Ainsi, un tel assemblage du couvercle d'extrémité 49 et du carter 17 permet de bloquer en rotation le couvercle d'extrémité 49 par rapport au carter 17, autour de l'axe de rotation X.

De cette manière, un tel assemblage du couvercle d'extrémité 49 et du carter 17 permet de bloquer en rotation le réducteur 19 par rapport au carter 17, autour de l'axe de rotation X.

En outre, la coopération du ou de chaque cran 55 du couvercle d'extrémité 49 avec la ou l'une des échancrures 56 du carter 17 permet de réaliser une reprise de couple transmis par le réducteur 19 au carter 17.

Avantageusement, la ou chaque échancrure 56 débouche sur un bord du carter 17, du côté de la deuxième extrémité 17b du carter 17.

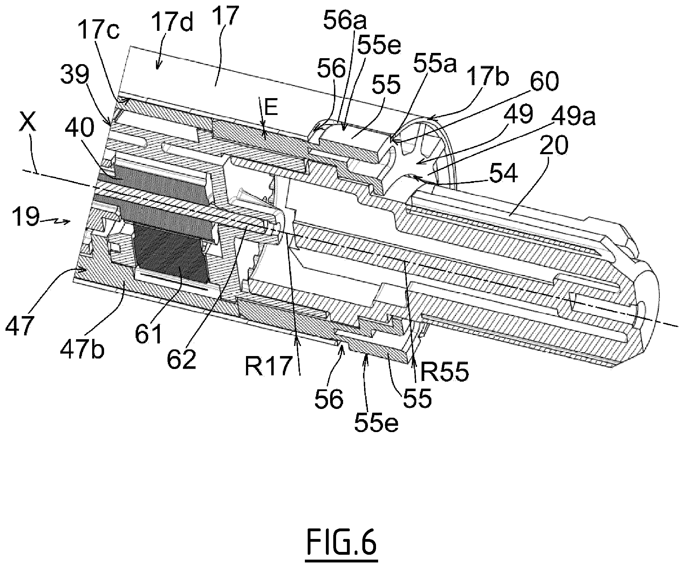

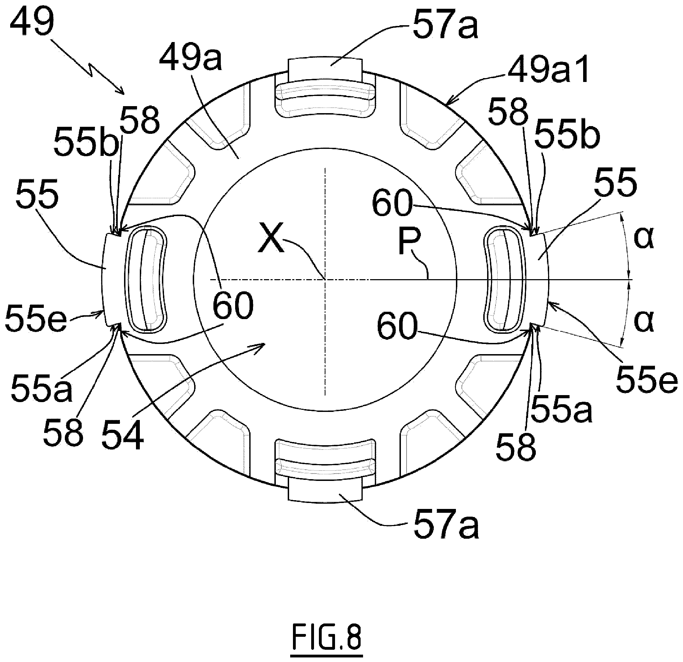

Ici, le couvercle d'extrémité 49 comprend deux crans 55, qui sont diamétralement opposés par rapport à l'axe de rotation X, dont un seul est visible à la figure 3, mais qui sont tous les deux visibles aux figures 6 et 8. Le carter 17 comprend deux échancrures 56, au niveau de sa deuxième extrémité 17b, qui sont également diamétralement opposées par rapport à l'axe de rotation X. En outre, chacune des échancrures 56 reçoit, autrement dit est configurée pour recevoir, l'un des crans 55, en particulier dans la configuration assemblée de l'actionneur électromécanique 11.

En variante, non représentée, le couvercle d'extrémité 49 comprend un unique cran 55 et le carter 17 comprend une unique échancrure 56, au niveau de sa deuxième extrémité 17b.

Dans une autre variante, non représentée, le couvercle d'extrémité 49 comprend trois crans 55, qui sont décalés angulairement d'un angle de 120° autour de l'axe de rotation X, ou quatre crans 55, qui sont décalés angulairement d'un angle de 90° autour de l'axe de rotation X. Dans ce cas, le carter 17 comprend, respectivement, trois échancrures 56, qui sont décalées angulairement d'un angle de 120° autour de l'axe de rotation X, ou quatre échancrures 56, qui sont décalées angulairement d'un angle de 90° autour de l'axe de rotation X.

Le ou chaque cran 55 du couvercle d'extrémité 49 comprend au moins un premier bord latéral 55a et un deuxième bord latéral 55b. Le deuxième bord latéral 55b est opposé au premier bord latéral 55a.

Le couvercle d'extrémité 49 comprend, en outre, un corps 49a. Le corps 49a comprend une surface externe 49a1.

Avantageusement, le ou chaque cran 55 s'étend à partir de la surface externe 49a1 du corps 49a, selon une direction radiale à l'axe de rotation X et vers l'extérieur du couvercle d'extrémité 49.

Avantageusement, la surface externe 49a1 du corps 49a du couvercle d'extrémité 49 est montée contre la surface intérieure 17c du carter 17 avec un ajustement serré.

La ou chaque échancrure 56 du carter 17 comprend au moins un premier bord latéral 56a et un deuxième bord latéral 56b. Le deuxième bord latéral 56b est opposé au premier bord latéral 56a.

Le ou chaque cran 55 du couvercle d'extrémité 49 comprend, autrement dit définit, un plan médian P passant par l'axe de rotation X, comme illustré à la figure 8.

Le plan médian P est équidistant des premier et deuxième bords latéraux 55a, 55b du ou de chaque cran 55.

Chacun des premier et deuxième bords latéraux 55a, 55b du ou de chaque cran 55 est incliné, par rapport au plan médian P, d'un angle α dont la valeur est comprise entre 5° et 45°, avantageusement entre 10° et 30° et préférentiellement de l'ordre de 15°.

Ainsi, l'inclinaison de chacun des premier et deuxième bords latéraux 55a, 55b du ou de chaque cran 55 du couvercle d'extrémité 49, par rapport au plan médian P, permet d'améliorer une tenue mécanique du couvercle d'extrémité 49 sur le carter 17 et de s'affranchir d'un ou plusieurs éléments de fixation du réducteur 19 par rapport au carter 17, notamment de type goupille, de type vis ou de type cran de maintien, de sorte à garantir une transmission de couple du réducteur 19 à l'arbre de sortie 20, lors de l'activation électrique du moteur électrique 16.

L'inclinaison de chacun des premier et deuxième bords latéraux 55a, 55b du ou de chaque cran 55 du couvercle d'extrémité 49, par rapport au plan médian P, permet de coincer chacun des premier et deuxième bords latéraux 56a, 56b de la ou de l'une des échancrures 56 du carter 17 au niveau de chaque zone de jonction 58.

De cette manière, l'inclinaison de chacun des premier et deuxième bords latéraux 55a, 55b du ou de chaque cran 55 du couvercle d'extrémité 49, par rapport au plan médian P, permet d'éviter que le réducteur 19 soit entraîné en rotation à l'intérieur du carter 17, autour de l'axe de rotation X, lors de l'activation électrique du moteur électrique 16.

Par conséquent, même dans le cas où l'épaisseur E du carter 17 est faible, le ou chaque cran 55 du couvercle d'extrémité 49 reste à l'intérieur de la ou de l'une des échancrures 56 du carter 17, dans laquelle ce cran 55 est emmanché, sans passer sous la surface intérieure 17c du carter 17, lors de l'activation électrique du moteur électrique 16.

En outre, l'absence d'un ou plusieurs éléments de fixation, notamment de type goupille, de type vis ou de type cran de maintien, entre le réducteur 19 et le carter 17 permet de s'affranchir soit d'un ou plusieurs trous dans le carter 17, soit d'une ou plusieurs déformations du carter 17.

De cette manière, le coût d'obtention de l'actionneur électromécanique 11 est moins élevé et le taux de défauts de production de l'actionneur électromécanique 11 est minimisé, étant donné que la fabrication du carter 17 ne nécessite pas d'opérations de perçage ou de déformation de celui-ci, pour fixer le réducteur 19 au carter 17.

Par ailleurs, le carter 17 et le réducteur 19 peuvent être réutilisés pour un autre assemblage de l'actionneur électromécanique 11, notamment suite à une réparation de celui-ci.

Le couvercle d'extrémité 49 comprend, en outre, la zone de jonction 58 située entre la surface externe 49a1 du corps 49a et chacun des premier et deuxième bords latéraux 55a, 55b du ou de chaque cran 55.

Ici, la ou chaque zone de jonction 58 correspond à un dièdre rentrant, autrement dit à un épaulement.

Avantageusement, l'épaisseur E du carter 17 est inférieure ou égale à un millimètre et demi, préférentiellement à un millimètre et plus particulièrement de l'ordre de huit dixièmes de millimètre.

Avantageusement, l'épaisseur E du carter 17 est inférieure ou égale à un millimètre et demi lorsque le diamètre extérieur QJ17 du carter 17 est inférieure ou égale à cinquante millimètres.

Avantageusement, l'épaisseur E du carter 17 est inférieure ou égale à un millimètre lorsque le diamètre extérieur QJ17 du carter 17 est inférieure ou égale à quarante millimètres.

Avantageusement, le corps 49a du couvercle d'extrémité 49 comprend un méplat 60 ménagé au niveau de chaque zone de jonction 58.

Autrement dit, chaque méplat 60 est ménagé au niveau d'un pied de l'un des premier et deuxième bords latéraux 55a, 55b du ou de chaque cran 55.

Ici, chaque méplat 60 correspond à une réduction d'épaisseur du corps 49a du couvercle d'extrémité 49.

Ainsi, chacun des premier et deuxième bords latéraux 56a, 56b de la ou de l'une des échancrures 56 du carter 17 se déforme, autrement dit est configuré pour se déformer, au niveau d'une zone formée par le méplat 60 ménagé au niveau de chaque zone de jonction 58 du couvercle d'extrémité 49, de sorte à coincer le carter 17 par le ou chaque cran 55 du couvercle d'extrémité 49, lors de l'activation électrique du moteur électrique 16, sans que le ou chaque cran 55 du couvercle d'extrémité 49 passe sous la surface intérieure 17c du carter 17.

Autrement dit, chacun des premier et deuxième bords latéraux 56a, 56b de la ou de l'une des échancrures 56 du carter 17 est orienté vers l'intérieur du couvercle d'extrémité 49 par le méplat 60 ménagé au niveau de chaque zone de jonction 58 du couvercle d'extrémité 49, lors de l'activation électrique du moteur électrique 16.

Avantageusement, le ou chaque cran 55 du couvercle d'extrémité 49 comprend une surface extérieure 55e.

Ici et comme illustré aux figures 3 et 6, la surface extérieure 55e du ou de chaque cran 55 est visible au travers de la ou l'une des échancrures 56 du carter 17, dans la configuration assemblée de l'actionneur électromécanique 11, à partir de l'extérieur du carter 17.

En outre, une valeur d'un rayon R55 entre l'axe de rotation X et la surface extérieure 55e du ou de chaque cran 55 est supérieure ou égale à une valeur d'un rayon R17 entre l'axe de rotation X et la surface extérieure 17d du carter 17, comme illustré à la figure 6. La surface extérieure 17d du carter 17 est la surface extérieure du carter 17 non-peinte ou brute. Autrement dit, la surface extérieure 17d du carter 17 correspond à la surface extérieure du carter 17 avant l'application de la couche de peinture sur celle-ci.

Ainsi, chacun des premier et deuxième bords latéraux 56a, 56b de la ou chaque échancrure 56 du carter 17 est en contact direct avec l'un des premier et deuxième bords latéraux 55a, 55b du ou de chaque cran 55, tout en garantissant un dépassement ou un alignement de la surface extérieure 55e du ou de chaque cran 55 par rapport à la surface extérieure 17d du carter 17, selon une direction radiale à l'axe de rotation X, en particulier lors de l'activation électrique du moteur électrique 16.

De cette manière, le dépassement ou l'alignement de la surface extérieure 55e du ou de chaque cran 55 par rapport à la surface extérieure 17d du carter 17, selon la direction radiale à l'axe de rotation X, permet d'éviter que le ou chaque cran 55 du couvercle d'extrémité 49 sorte de la ou l'une des échancrures 56 du carter 17, dans laquelle ce cran 55 est emmanché, en passant sous la surface intérieure 17c du carter 17.

Avantageusement, dans le cas où la valeur du rayon R55 est strictement supérieure à la valeur du rayon R17 et si la différence entre ces valeurs des rayons R55, R17 est égale à l'épaisseur de la couche de peinture, la surface extérieure 55e du ou de chaque cran 55 est affleurante à la surface extérieure du carter 17 peinte, la surface extérieure du carter 17 étant définie comme étant une surface extérieure après l'application de la couche de peinture sur la surface extérieure 17d du carter 17.

Ainsi, l'aspect esthétique de l'actionneur électromécanique 11 est amélioré étant donné que le ou chaque cran 55 ne dépasse pas de la surface extérieure du carter 17 peinte.

Avantageusement, le couvercle d'extrémité 49 et le carter 17 sont fixés, autrement dit sont configurés pour être fixés, entre eux, au moyen d'éléments de fixation 57a, 57b, pouvant être appelés premiers éléments de fixation 57a, 57b, en particulier dans la configuration assemblée de l'actionneur électromécanique 11.

Ainsi, la fixation du couvercle d'extrémité 49 au carter 17 permet de bloquer, en translation, le couvercle d'extrémité 49, ainsi que le réducteur 19, par rapport au carter 17, au voisinage de la deuxième extrémité 17b du carter 17, suivant la direction de l'axe de rotation X.

En outre, suite à la fixation du couvercle d'extrémité 49 par rapport au carter 17, le couvercle d'extrémité 49 sert de butée pour le réducteur 19, lors de l'assemblage de l'actionneur électromécanique 11 et lors de la manipulation de l'actionneur électromécanique 11 dans un état monté, suivant la direction de l'axe de rotation X.

Avantageusement, les éléments de fixation 57a, 57b du couvercle d'extrémité 49 avec le carter 17 sont des éléments de fixation par encliquetage élastique.

Ainsi, la fixation du couvercle d'extrémité 49 avec le carter 17 est mise en oeuvre de manière simple et peu onéreuse.

Ici, la fixation du couvercle d'extrémité 49 avec le carter 17 est mise en oeuvre au moyen de clips 57a, en particulier au nombre de deux, ménagés sur le couvercle d'extrémité 49, et d'ouvertures 57b, en particulier au nombre de deux, ménagées dans le carter 17, au niveau de sa deuxième extrémité 17b. Dans la configuration assemblée de l'actionneur électromécanique 11, chaque clip 57a est logé dans l'une des ouvertures 57b.

Le nombre d'éléments de fixation par encliquetage élastique n'est pas limitatif et peut être différent. Il peut être, par exemple, de un ou supérieur ou égal à trois.

Ici, à la différence des échancrures 56, les ouvertures 57b ne débouchent pas sur le bord du carter 17, du côté de la deuxième extrémité 17b du carter 17.

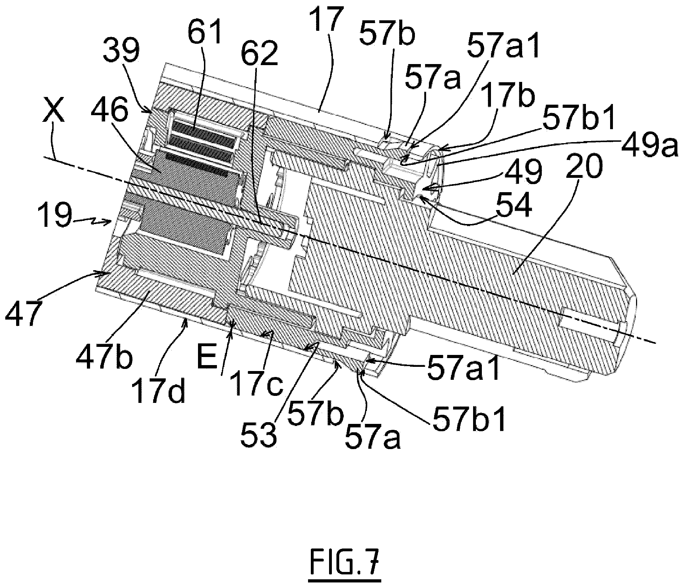

Avantageusement, les éléments de fixation 57a, 57b constituent une butée de positionnement du couvercle d'extrémité 49 par rapport au carter 17, au niveau de la deuxième extrémité 17b du carter 17, en particulier dans la configuration assemblée de l'actionneur électromécanique 11, comme illustré à la figure 7.

Ici, la butée formée par les éléments de fixation 57a, 57b est obtenue par la mise en appui d'une surface, en particulier d'extrémité, 57a1 du ou de chaque clip 57a avec un bord 57b1 de la ou de l'une des ouvertures 57b.

Ainsi, cette butée de positionnement réalisée au moyen des éléments de fixation 57a, 57b permet de limiter l'enfoncement du couvercle d'extrémité 49 à l'intérieur du carter 17, suivant la direction de l'axe de rotation X.

Avantageusement, le couvercle d'extrémité 49 comprend, en outre, une collerette 53, telle qu'illustré aux figures 5 et 7. En outre, la collerette 53 est en appui, autrement dit est configurée pour être en appui, contre la surface intérieure 17c du carter 17, en particulier dans la configuration assemblée de l'actionneur électromécanique 11.

Ainsi, la collerette 53 du couvercle d'extrémité 49 participe à l'étanchéité entre le couvercle d'extrémité 49 et le carter 17 en exerçant une pression contre la surface intérieure 17c du carter 17.

De cette manière, l'étanchéité de l'actionneur électromécanique 11, au niveau de la deuxième extrémité 17b du carter 17, est mise en oeuvre, d'une part, par l'emmanchement du couvercle d'extrémité 49 à l'intérieur du carter 17, de sorte à obturer la deuxième extrémité 17b du carter 17, et, d'autre part, par la mise en appui de la collerette 53 du couvercle d'extrémité 49 contre la surface intérieure 17c du carter 17.

Grâce à la présente invention, l'inclinaison de chacun des premier et deuxième bords latéraux du ou de chaque cran du couvercle d'extrémité, par rapport au plan médian, permet d'améliorer une tenue mécanique du couvercle d'extrémité sur le carter et de s'affranchir d'un ou plusieurs éléments de fixation du réducteur par rapport au carter, de sorte à garantir une transmission de couple du réducteur à l'arbre de sortie, lors de l'activation électrique du moteur électrique.

De nombreuses modifications peuvent être apportées aux exemples de réalisation décrits précédemment, sans sortir du cadre de l'invention défini par les revendications.

En variante, non représentée, le frein 25 est un frein à came, un frein magnétique ou un frein électromagnétique.

En variante, non représentée, le frein 25 est configuré pour être disposé, autrement dit est disposé, en particulier dans la configuration assemblée de l'actionneur électromécanique 11, entre le moteur électrique 16 et le réducteur 19, autrement dit à la sortie du moteur électrique 16, entre l'unité de contrôle 15 et le moteur électrique 16, autrement dit à l'entrée du moteur électrique 16, ou entre le réducteur 19 et l'arbre de sortie 20, autrement dit à la sortie du réducteur 19.

En outre, les modes de réalisation et variantes envisagés peuvent être combinés pour générer de nouveaux modes de réalisation de l'invention, sans sortir du cadre de l'invention défini par les revendications.

## Revendications

1. Actionneur électromécanique (11) d'un dispositif d'occultation (3),
l'actionneur électromécanique (11) comprenant au moins :
- un moteur électrique (16),
- un réducteur (19),
- un carter (17), le moteur électrique (16) et le réducteur (19) étant montés à l'intérieur du carter (17),
- un arbre de sortie (20), le réducteur (19) étant assemblé avec l'arbre de sortie (20), et
- un couvercle d'extrémité (49),
le carter (17) comprenant :
- une première extrémité (17a) et une deuxième extrémité (17b), la deuxième extrémité (17b) étant opposée à la première extrémité (17a), le couvercle d'extrémité (49) étant disposé au niveau de la deuxième extrémité (17b) du carter (17),
- une surface intérieure (17c) et une surface extérieure (17d), la surface intérieure (17c) étant opposée à la surface extérieure (17d), et
- au moins une échancrure (56), la ou chaque échancrure (56) étant ménagée au niveau de la deuxième extrémité (17b) du carter (17), la ou chaque échancrure (56) comprenant au moins un premier bord latéral (56a) et un deuxième bord latéral (56b), le deuxième bord latéral (56b) étant opposé au premier bord latéral (56a),
le couvercle d'extrémité (49) comprenant au moins :
- un corps (49a), le corps (49a) comprenant une surface externe (49a1),
- un cran (55), le ou chaque cran (55) étant emmanché dans la ou l'une des échancrures (56), le ou chaque cran (55) comprenant au moins un premier bord latéral (55a) et un deuxième bord latéral (55b), le deuxième bord latéral (55b) étant opposé au premier bord latéral (55a), et
- une zone de jonction (58) située entre la surface externe (49a1) du corps (49a) et chacun des premier et deuxième bords latéraux (55a, 55b) du ou de chaque cran (55),
l'actionneur électromécanique (11) comprenant un axe de rotation (X) passant par un centre des organes (16, 19, 20, 49) montés au moins en partie à l'intérieur du carter (17), le ou chaque cran (55) comprenant un plan médian (P) passant par l'axe de rotation (X),
**caractérisé en ce que** chacun des premier et deuxième bords latéraux (55a, 55b) du ou de chaque cran (55) est incliné, par rapport au plan médian (P), d'un angle (α) dont la valeur est comprise entre 5° et 45°, de sorte à coincer chacun des premier et deuxième bords latéraux (56a, 56b) de la ou de l'une des échancrures (56) au niveau de chaque zone de jonction (58).

2. Actionneur électromécanique (11) d'un dispositif d'occultation (3) selon la revendication 1, **caractérisé en ce que** la surface externe (49a1) du corps (49a) est montée contre la surface intérieure (17c) du carter (17) avec un ajustement serré.

3. Actionneur électromécanique (11) d'un dispositif d'occultation (3) selon la revendication 2, **caractérisé**
**en ce que** le ou chaque cran (55) s'étend à partir de la surface externe (49a1) du corps (49a), selon une direction radiale à l'axe de rotation (X) et vers l'extérieur du couvercle d'extrémité (49),
et **en ce que** le corps (49) comprend un méplat (60) ménagé au niveau de chaque zone de jonction (58).

4. Actionneur électromécanique (11) d'un dispositif d'occultation (3) selon l'une quelconque des revendications 1 à 3, **caractérisé**
**en ce que** le carter (17) est un tube présentant une section circulaire,
**en ce que** le carter (17) est recouvert d'une couche de peinture déposée au moins sur la surface extérieure (17d) du carter (17),
**en ce que** le ou chaque cran (55) du couvercle d'extrémité (49) comprend une surface extérieure (55e),
et **en ce qu'**une valeur d'un rayon (R55) entre l'axe de rotation (X) et la surface extérieure (55e) du ou de chaque cran (55) est supérieure ou égale à une valeur d'un rayon (R17) entre l'axe de rotation (X) et la surface extérieure (17d) du carter (17), la surface extérieure (17d) du carter (17) étant la surface extérieure du carter (17) non-peinte.

5. Actionneur électromécanique (11) d'un dispositif d'occultation (3) selon l'une quelconque des revendications 1 à 4, **caractérisé**
**en ce que** le carter (17) présente une épaisseur (E) définie entre ses surfaces intérieure (17c) et extérieure (17d),
et **en ce que** l'épaisseur (E) du carter (17) est inférieure ou égale à un millimètre et demi.

6. Actionneur électromécanique (11) d'un dispositif d'occultation (3) selon l'une quelconque des revendications 1 à 5, **caractérisé**
**en ce que** le couvercle d'extrémité (49) et le carter (17) sont fixés entre eux, au moyen de premiers éléments de fixation (57a, 57b),
et **en ce que** les premiers éléments de fixation (57a, 57b) du couvercle d'extrémité (49) avec le carter (17) sont des éléments de fixation par encliquetage élastique.

7. Actionneur électromécanique (11) d'un dispositif d'occultation (3) selon la revendication 6, **caractérisé en ce que** les premiers éléments de fixation (57a, 57b) constituent une butée de positionnement du couvercle d'extrémité (49) par rapport au carter (17), au niveau de la deuxième extrémité (17b) du carter (17).

8. Actionneur électromécanique (11) d'un dispositif d'occultation (3) selon l'une quelconque des revendications 1 à 7, **caractérisé en ce que** le couvercle d'extrémité (49) est fixé au réducteur (19) au moyen de deuxièmes éléments de fixation (52a, 52b).

9. Actionneur électromécanique (11) d'un dispositif d'occultation (3) selon l'une quelconque des revendications 1 à 8, **caractérisé**
**en ce que** le réducteur (19) comprend des premières encoches (50a) et des premières languettes (50b) disposées alternativement autour de l'axe de rotation (X),
**en ce que** le couvercle d'extrémité (49) comprend des deuxièmes languettes (51a) et des deuxièmes encoches (51b) disposées alternativement autour de l'axe de rotation (X),
et **en ce que** les premières encoches (50a) et les premières languettes (50b) du réducteur (19) sont imbriquées dans les deuxièmes languettes (51a) et les deuxièmes encoches (51b) du couvercle d'extrémité (49).

10. Dispositif d'occultation (3),
le dispositif d'occultation (3) comprenant au moins :
- un écran (2), et
- un actionneur électromécanique (11), l'écran (2) étant entraîné en déplacement par l'actionneur électromécanique (11),
**caractérisé en ce que** l'actionneur électromécanique (11) est conforme à l'une quelconque des revendications 1 à 9.
